# EUROPEAN PATENT APPLICATION

(11) **EP 3 319 034 A1**
(43) Date of publication of application: **09.05.2018**
(21) Application number: 16818060.2
(22) Date of filing: 01.07.2016
(51) Int. Cl.: G06Q 30/02, G06F 13/00

(54) **INFORMATION MANAGEMENT DEVICE AND INFORMATION MANAGEMENT METHOD**

(30) Priority: 01.07.2015 JP 2015133073; 15.01.2016 JP 2016006519
(71) Applicant: Recruit Holdings Co., Ltd., Tokyo 104-0061 (JP)
(72) Inventor: FUKUMOTO, Takahiko, Tokyo 100-6640 (JP); KATAYAMA, Teruhiko, Tokyo 100-6640 (JP); NAKAYASU, Akikazu, Tokyo 100-6640 (JP)
(74) Representative: EIP
(86) International application number: PCT/JP2016/069572
(87) International publication number: WO 2017/002952

(57) **Abstract**

An information management technique for analyzing users based on the users' purchase histories to assist extraction of delivery targets is provided. The present information management apparatus includes: history recording means (138) for recording history information; collection means (131) for collecting the history information from a shop terminal (20) or a user terminal (30) and storing the history information in the history recording means; analysis means (132) for, in response to a request from the shop terminal, extracting history information for the shop corresponding to the shop terminal from the history recording means, dividing users who visited the shop into a plurality of groups and displaying the plurality of groups on the shop terminal; and delivery means (133) for, in response to selection of one group by the shop terminal, delivering predetermined data to a user belonging to the selected group.

## Description

### Cross Reference to Related Applications

The present application is based on Japanese Patent Application No. 2015-133073 filed on July 1, 2015 and Japanese Patent Application No. 2016-6519 filed on January 15, 2016, the disclosures of which are incorporated herein by reference.

### Technical Field

The present disclosure relates to a technique for managing information on, e.g., users.

### Background Art

Conventionally, when information such as a coupon or news is delivered to users using a shop, a clerk of the shop himself/herself narrows down users to which an electronic coupon is to be delivered, using attribute information such as, genders, ages and/or birth months of the users, and delivers information such as a coupon or news to the resulting users. Also, Patent Literature 1 describes delivering a shop's coupon service information only to a community site holding members matching a characteristic of the shop based on a keyword representing the characteristic of the shop that provides the coupon service.

### Citation List

### Patent Literature

Patent Literature 1: Japanese Patent Laid-Open No. 2009-217743

### Summary of Invention

In conventional techniques, clerks often have neither knowledge nor experience regarding determination of which attribute to be based on to effectively narrow down users to which a coupon is to be delivered, and thus, in reality, it is difficult to effectively narrow down users to which a coupon is to be delivered. Also, the invention described in Patent Literature 1 is one focusing on acquisition of new customers and thus is difficult to utilize for existing customers.

On the other hand, an invention according to a predetermined embodiment of the present disclosure is intended to provide an information management technique for analyzing users based on the users' purchase histories to assist extraction of delivery targets. Another object of the present invention will be clarified by referring to the entire present description.

An information management apparatus according to a predetermined embodiment of the present invention includes: history recording means for recording history information including a user ID for identifying a user, information relating to a date of a visit to a shop and information relating to an amount of purchase made by the user at the shop; collection means for collecting the history information from a shop terminal used in the shop or a user terminal used by the user and storing the history information in the history recording means; analysis means for, in response to a request from the shop terminal, extracting history information for the shop corresponding to the shop terminal from the history recording means, dividing users who visited the shop within a predetermined period of time into a plurality of groups and displaying the plurality of groups on the shop terminal in such a manner that the plurality of groups are distinguishable from each other; and delivery means for, in response to selection of one group by the shop terminal, delivering predetermined data to a user belonging to the selected group.

The information management apparatus includes that the collection means acquires the user ID included in the history information based on a name, a phone number or a login ID of a user, the name, the phone number or the login ID being acquired when the user makes a reservation with the shop. Also, the information management apparatus includes that the collection means acquires the user ID included in the history information from the user terminal that has received a beacon transmitted from a transmitter installed at the shop. Furthermore, the information management apparatus includes that the collection means acquires the user ID included in the history information by the shop terminal reading the user ID from an image displayed on the user terminal. Consequently, purchase information can be recorded in association with a user ID.

The information management apparatus includes that the analysis means divides the users into the plurality of groups based on a number of visits to the shop and a cumulative purchase amount in the predetermined period of time, the number of visits and the cumulative purchase amount being aggregated for each user, and information relating to a date of a latest visit or a date of a latest purchase. Consequently, more effective narrowing-down of users is enabled.

Also, an information management method according to a predetermined embodiment of the present invention is a method to be executed in a processor of a computer capable of using a history database for recording history information including a user ID for identifying a user, information relating to a date of a visit to a shop and information relating to an amount of purchase made by the user at the shop, the method including: collecting the history information from a shop terminal used in the shop or a user terminal used by the user and storing the history information in the history recording means; in response to a request from the shop terminal, extracting history information for the shop corresponding to the shop terminal from the history recording means, dividing users who visited the shop within a predetermined period of time into a plurality of groups and displaying the plurality of groups on the shop terminal in such a manner that the plurality of groups are distinguishable from each other; and in response to selection of one group by the shop terminal, delivering predetermined data to a user belonging to the selected group.

A program according to a predetermined embodiment of the present invention is a program for causing a computer to perform at least a part of each of the processings in the aforementioned information management method. The "computer" mentioned here may be not only a host computer, but also a PC (personal computer), a tablet terminal, a smartphone, a wearable terminal or another arbitrary information processing apparatus. Such program can be installed or loaded into the computer through any of various computer-readable recording mediums including, e.g., optical disks such as CD-ROMs, magnetic disks and semiconductor memories, or downloading, e.g., an application via, e.g., a communication network.

In the present description, etc., "means" does not simply mean physical means and includes a case where a function the means has is provided by software. Also, a function one means has may be provided by two or more physical means or functions of two or more means may be provided by one physical means.

### Advantageous Effect of Invention

An invention according to a predetermined embodiment of the present disclosure enables provision of an information management technique for analyzing users based on the users' purchase histories to assist extraction of delivery targets.

### Brief Description of Drawings

[Figure 1] Figure 1 is a schematic diagram illustrating a configuration of an information management system 1 according to an embodiment of the present invention.
[Figure 2] Figure 2 is a schematic diagram illustrating an example of a configuration of an information management server 10 according to the present embodiment.
[Figure 3] Figure 3 is a schematic diagram illustrating an example of a configuration of a shop terminal 20 according to the present embodiment.
[Figure 4] Figure 4 is a schematic diagram illustrating an example of a configuration of a user terminal 30 according to the present embodiment.
[Figure 5] Figure 5 is a flowchart illustrating an example of collection processing where a user visits a shop after making a reservation with the shop in advance.
[Figure 6] Figure 6 is a flowchart where history information collection processing is performed using a beacon.
[Figure 7] Figure 7 is a flowchart where history information collection processing is performed using information presented by a user.
[Figure 8] Figure 8 is a flowchart illustrating an example of history information analysis processing and processing for delivery of, e.g., a coupon according to the present embodiment.
[Figure 9] Figure 9 is a schematic diagram illustrating an example of an analysis result displayed on a shop terminal 20.
[Figure 10] Figure 10 is a schematic diagram illustrating an example of a list displayed on a shop terminal 20.
[Figure 11] Figure 11 is a schematic diagram illustrating an example of a coupon selection screen displayed on a shop terminal 20.

### Description of Embodiment

An embodiment of the present invention will be described in detail below with reference to the drawings. Note that same elements are provided with a same reference numeral and overlapping description thereof will be omitted. Also, the below embodiment is a mere exemplification for describing the present invention and is not intended to limit the present invention only to that embodiment. Furthermore, various alterations of the present invention are possible as long as such alterations do not depart from the spirit of the invention.

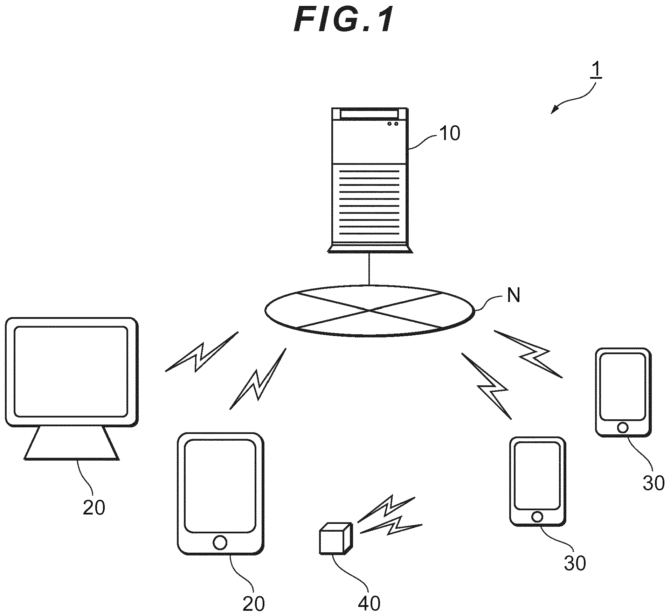

Figure 1 is a schematic diagram illustrating a configuration of an information management system 1 according to an embodiment of the present invention. As illustrated in the figure, in the present embodiment, an information management system 1 includes an information management server 10, one or more shop terminals 20 and one or more user terminals 30. Each of the shop terminals 20 and the user terminals 30 is configured to be capable of communicating with the information management server 10 via a network N. Also, the information management system 1 may be configured so as to include one or more beacon transmitters 40.

The information management server 10 is configured by, for example, a host computer with high arithmetic processing performance, and a server function is exerted by operation of a predetermined server program in the host computer. Here, the computer configuring the information management server 10 is not limited to a host computer and may be configured by, for example, a general-purpose or specific-use computer or a communication terminal apparatus. Also, the number of host computers configuring the information management server 10 is not necessarily limited to one, and the information management server 10 may be configured by a plurality of sub-computers dispersed on the network N.

Each of the shop terminals 20 is a terminal apparatus to be used by, e.g., a clerk in a shop such as a restaurant, a beauty shop or a hotel. In each shop, one or more shop terminals 20 may be used.

Each of the user terminals 30 is a terminal apparatus to be used by, e.g., a user using a shop, and preferably, can be carried by the user. Also, preferably, each of the user terminals 30 is a terminal apparatus capable of receiving a beacon transmitted by a beacon transmitter 40.

In the present embodiment, it is assumed that the shop terminals 20 are tablet terminals or PCs (personal computers) and the user terminals 30 are smartphones. However, the shop terminals 20 and the user terminals 30 are not limited to these examples, and for the shop terminals 20 and the user terminals 30, for example, PCs (personal computers), tablet terminals, smartphones, mobile phones, mobile information terminals (PDA) or other arbitrary terminal apparatuses may be used.

Each of the beacon transmitters 40 is a transmitter that transmits a beacon including ID information unique to the transmitter, using a near-field radio communication technique such as Bluetooth Low Energy (BLE), and for the beacon transmitters 40, beacon terminals such as iBeacons can be used. One or more beacon transmitters 40 are installed at each shop. For example, if a beacon transmitter 40 is installed at each of an area near an entrance and an area near a cash register of a shop, when a user enters the shop or pays a bill, a user terminal 30 carried by the user can receive a beacon.

The network N includes a communication network that enables transmission/reception of information among the information management server 10, the shop terminals 20 and the user terminals 30. The network N may be, for example, any of the Internet, an LAN, a dedicated line, a phone line, an intranet, a mobile communication network, Bluetooth, WiFi (Wireless Fidelity) and other communication media and any combination thereof, and may be either wired or wireless.

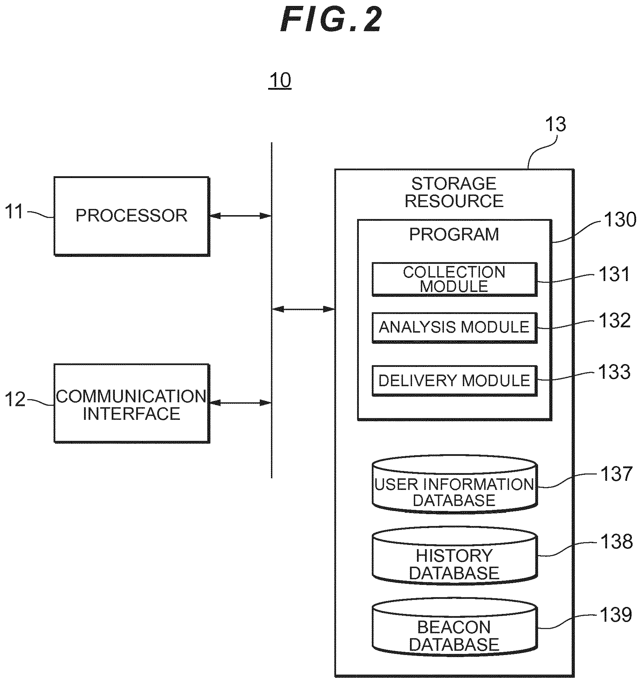

Figure 2 is a schematic diagram illustrating an example of a configuration of the information management server 10 according to the present embodiment. As illustrated in the figure, the information management server 10 in the present embodiment includes a processor 11, a communication interface 12 and a storage resource 13.

The processor 11 includes an arithmetic logic unit that performs processing for an arithmetic operation, a logical operation, a bit operation, etc., and various types of registers (e.g., a program counter, a data register, an instruction register and a general-purpose register), and interprets and executes a computer program 130 stored in the storage resource 13 to perform processing according to requests from the shop terminals 20 and the user terminals 30.

The communication interface 12 is a hardware module connected to the network N for communication with the shop terminals 20 and the user terminals 30, and is, for example, a modulation/demodulation apparatus such as an ISDN modem, an ADSL modem, a cable modem, an optical modem or a software modem.

The storage resource 13 is, for example, a logical device provided by a storage area of a physical device (for example, a computer-readable recording medium such as a disk drive or a semiconductor memory). A plurality of physical devices may be mapped on one logical device or one physical device may be mapped on a plurality of logical devices. In the storage resource 13, the computer program 130 and databases for, e.g., users' profiles and history information are stored. Also, in the storage resource 13, e.g., various data including parameters necessary in performing various control/arithmetic processing and arithmetic parameters necessary for image generation/display processing are stored.

The computer program 130 is a program for performing predetermined processing based on, e.g., information or a request received from a shop terminal 20 or a user terminal 30, and includes a plurality of software modules to be called and executed as appropriate during operation of a main program (e.g., the aforementioned server program) of the information management server 10. Each of the software modules is a modularized sub-program module, and is one created using, for example, a procedure, a subroutine, a method, a function and a data structure, in order to perform particular processing.

More specifically, the computer program 130 includes a collection module 131, an analysis module 132 and a delivery module 133. Also, the computer program 130 may include, e.g., an image module that performs processing for generating image information for displaying, e.g., a result of arithmetic processing on a shop terminal 20 or a user terminal 30 and performs processing for the display, and a communication module that performs, e.g., processing of communication via the network N.

The collection module 131 performs various control/arithmetic processing pertaining to collection of history information relating to users' visits and purchases in a shop from shop terminals 20 or user terminals 30 and storing of the history information in a history database 138. Also, the collection module 131 performs various control/arithmetic processing pertaining to management of history information accumulated in the history database 138.

The analysis module 132 performs various control/arithmetic processing including processing for, in response to a request from a shop terminal 20, analyzing the collected history information to divide the users into a plurality of groups and displaying the plurality of groups on the shop terminal 20 in such a manner that the plurality of groups are distinguishable from one another.

The delivery module 133 performs various control/arithmetic processing pertaining to delivery of data including an electronic coupon to users selected, extracted or the like.

A user information database 137 is a database for managing information including the users' profiles. For example, user IDs for identifying the respective users in the information management system 1, and names, phone numbers and/or other user profiles of the users are recorded in association with each other.

The history database 138 is a database for accumulating history information relating to the users' visits and purchases. For example, the user IDs of the users, shops ID for identifying the respective shops, time/date information indicating dates or times and dates of visits and purchases in the respective shops, and purchase information including amounts of the purchases by the users are recorded in association with one another. The configuration may be made so that a blank in the purchase information or a record of zero as the amount of purchase indicates that the relevant user only visited the shop and made no purchase. Also, the purchase information may be a total amount of products, etc., purchased by a user, or quantities and amounts of all products, etc., purchased by a user may be recorded individually.

A beacon database 139 is a database for managing locations at which the beacon transmitters 40 are installed. For example, beacon IDs for identifying the respective beacon transmitters 40, and the shop IDs of shops at which the respective beacon transmitters 40 are installed and information relating to positions at which the respective beacon transmitters 40 are installed (e.g., an area near an entrance or an area near a POS cash register) in the respective shops are recorded in association with each other.

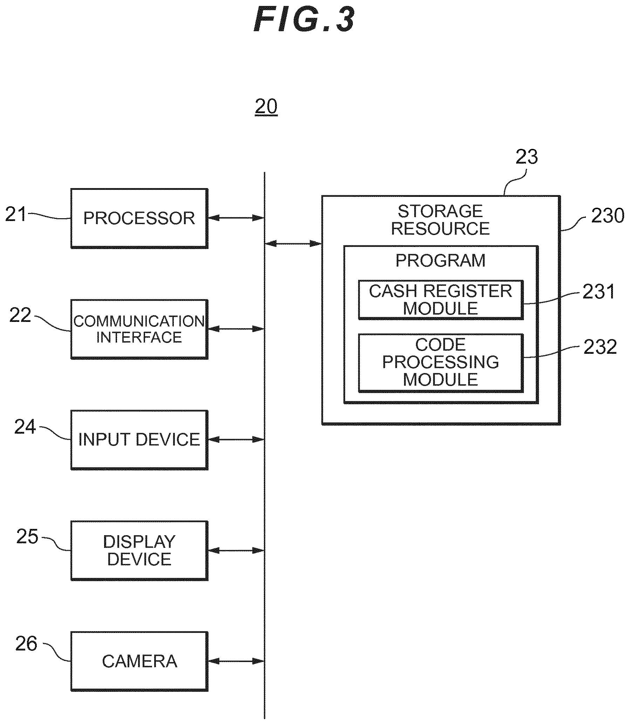

Figure 3 is a schematic diagram illustrating an example of a configuration of a shop terminal 20 according to the present embodiment. As illustrated in the figure, a shop terminal 20 in the present embodiment includes a processor 21, a communication interface 22, a storage resource 23, an input device 24, a display device 25 and a camera 26.

The processor 21 includes an arithmetic logic unit and various registers (e.g., a program counter, a data register, an instruction register and/or a general-purpose register), and interprets and executes a computer program 230 stored in the storage resource 23, transmits a request to the information management server 10 according to, e.g., operation information input to the input device 24 and receives a response from the information management server 10.

The storage resource 23 is, for example, a logical device provided by a storage area of a physical device (for example, a computer-readable recording medium such as a disk drive or a semiconductor memory). In the storage resource 23, besides the computer program 230, e.g., an operating system program, a driver program and various data to be used for processing in the shop terminal 20 are stored. Examples of the driver program include, e.g., an input device driver program for controlling the input device 24 and an output device driver program for controlling the display device 25. Examples of various data include history of information on orders placed by users and information on bills to be paid by users.

More specifically, the computer program 230 includes a cash register module 231 that causes the shop terminal 20 to function as a POS (Point of Sales) register (POS cash register) to perform various control/arithmetic processing pertaining to billing processing in the shop and a code processing module 232 that reads code information such as a two-dimensional barcode or a barcode to perform various control/arithmetic processing pertaining to the code information. Each of these modules can be implemented by installation of an application program in the shop terminal 20, the application program being delivered from a server apparatus (not illustrated) through the network N.

The communication interface 22 is one intended to provide a connection interface with the information management server 10, and includes a radio communication interface or a wired communication interface. Also, the input device 24 is one intended to provide an interface that receives an input operation from a user, and may include, e.g., a touch panel, a keyboard and/or a mouse. Furthermore, the display device 25 is one intended to provide an image display interface for, e.g., a POS cash register screen or a business assistance screen for coupon delivery to a user, and examples of the display device 25 include, e.g., a liquid-crystal display, an organic EL display and a CRT display. Also, the camera 26 is one intended to pick up a still image of a subject such as a two-dimensional barcode.

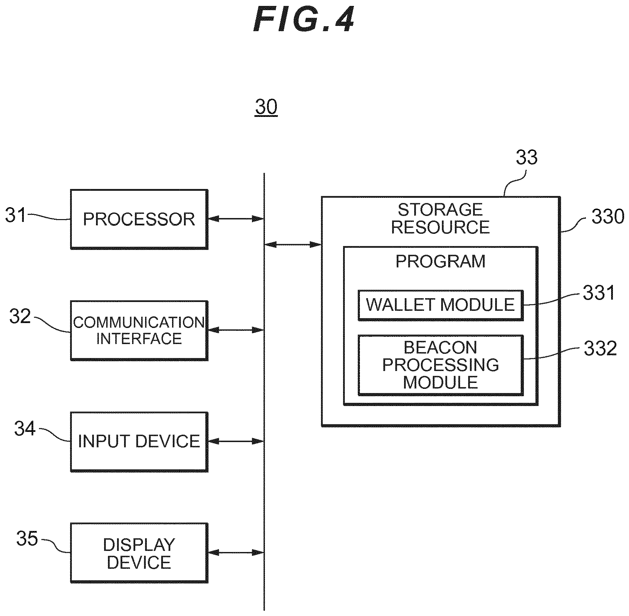

Figure 4 is a schematic diagram illustrating an example of a configuration of a user terminal 30 according to the present embodiment. As illustrated in the figure, a user terminal 30 in the present embodiment includes a processor 31, a communication interface 32, a storage resource 33, an input device 34 and a display device 35. These components can generally be the same as the respective components configuring a shop terminal 20, and thus, description thereof will be omitted here.

A computer program 330 is stored in the storage resource 33. More specifically, the computer program 330 includes a wallet module 331 that performs various control/arithmetic processing pertaining to management of points and/or coupons the relevant user holds, and a beacon processing module 332 that receives a beacon transmitted by a beacon transmitter 40 and performs various control/arithmetic processing pertaining to the beacon. Each of these modules can be implemented by installation of an application program in the user terminal 30, the application program being delivered from a server apparatus (not illustrated) through the network N.

Next, a specific processing flow of information management processing by the information management system 1 according to the present embodiment will be described.

User information management processing by the information management system 1 includes: (1) collection processing for collecting history information of users' visits and purchases in a shop and storing the history information in the relevant database; (2) analysis processing for analyzing the collected history information and dividing the users into a plurality of groups; and (3) delivery processing for delivering, e.g., a coupon to particular users. Therefore, each of the processings will be described below.

### (1. History information collection processing)

The collection processing is processing to be controlled by the collection module 131, and includes processing for the information management server 10 to collect history information relating to the users' visits and purchases in the shop from a shop terminal 20 and a user terminal 30 and store the history information in the history database 138. The information management server 10 collects the history information of the users through various methods.

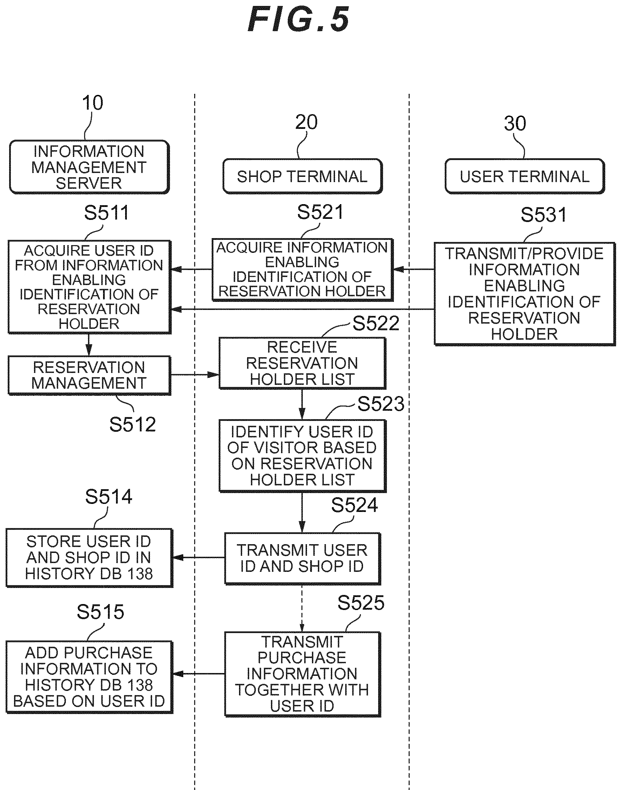

Figure 5 is a flowchart illustrating an example of the collection processing where a user visits a shop after making a reservation with the shop in advance, as an example of the history information collection processing according to the present embodiment. When the user makes a reservation with a shop via the Internet or a phone, an ID, a name and a telephone number, etc., of the user are input or asked, the user is identified using the ID, the name and the telephone number, etc., as keys, and when the user actually visits the shop, a clerk identifies the visitor from a reservation list and thereby information of the user's visit is thereby accumulated in a user database. More specific description will be provided below.

First, when a user makes a reservation with a certain shop, information enabling identification of a holder of the reservation is transmitted to the information management server 10. Here, the reservation may be, e.g., a telephone reservation or an Internet reservation.

In the case of a telephone reservation, as information for identification of a holder of the reservation, for example, a name and a phone number of the reservation holder can be used. The user makes a call to the shop and orally notifies a clerk of his/her own name and phone number (step S531). The clerk inputs the name and the phone number heard from the user to a shop terminal 20 or another reservation management terminal (step S521). For the phone number, a number of a telephone that is being used by the user may be acquired on the shop side, using a caller identification function. In this case, using CTI (Computer Telephony Integration), the name of the user may be acquired from the database with reference to the acquired phone number.

Also, in the case of an Internet reservation, as information for identifying a holder of the reservation, for example, a login ID for a reservation website can be used. Using a user terminal 30 or another terminal apparatus, the user accesses a reservation website of the shop and, e.g., inputs a login ID to log in the reservation website, and then performs a reservation procedure. The login ID input at the time of the log into the reservation website is provided from the user terminal 30 to the information management server 10 (step S531). Here, for the reservation website, for example, an example in which a reservation website and a reservation management function are provided by the information management server 10 has been indicated; however, reservation website is not limited to this example and a case in which a reservation management function is provided by another server that is separate from the information management server 10 may be employed.

The information management server 10 searches the user information database 137 using the information enabling identification of the reservation holder, which has been acquired from the user, as a key, and acquires a user ID corresponding to the reservation holder (step S511). Then, the information management server 10 performs reservation management using the user ID (step S512). Here, if a reservation website and a reservation management function are provided by another server that is separate from the information management server 10, the processing in steps S511 and S512 may be performed by the other server. Also, if the user ID is used as the login ID, the processing in step S511 may be skipped.

Based on control by the cash register module 231, the shop terminal 20 receives information of a reservation holder list of the day from the information management server 10 or the other reservation management server at a predetermined timing and displays the reservation holder list of the day on the display device 25 (step S522). The reservation holder list information is, for example, a list of user IDs, names and phone numbers of all users each made a reservation for the day.

If a visitor has a reservation, the clerk asks a name of the visitor, and, for example, taps an area in which the name of the visitor is indicated in the reservation holder list displayed on the shop terminal 20. The shop terminal 20 extracts a user ID corresponding to the tapped name to identify a user ID of the user visiting the shop (step S523). The shop terminal 20 transmits an electronic message including the user ID of the visitor identified in such a manner as above, a shop ID registered in advance in the shop terminal 20 and time/date information for the user's visit, to the information management server 10 (step S524). The information management server 10 stores the user ID, the shop ID and the time/date information included in the electronic message received from the shop terminal 20, in the history database 138 (step S514). Consequently, history information indicating the user's visit is accumulated in the history database 138.

Subsequently, based on the control by the cash register module 231, information on products and services purchased or ordered by the user is managed in the shop terminal 20 in linkage with the user ID. At the time of payment, amounts of the orders and products, etc., linked with the user ID are added up. Upon the user finishing the payment, the shop terminal 20 generates purchase information including the products, etc., purchased by the user and the payment amount, and transmits an electronic message including the purchase information, the user ID, the shop ID and time/date information for the payment, to the information management server 10 (step S525).

The information management server 10 stores the user ID, the shop ID, the time/date information and the purchase information included in the electronic message, in the history database 138 (step S515). Consequently, history information indicating the user's purchase is accumulated in the history database 138.

Here, the history information indicating the user's visit to the shop, which has been stored in step S514, and the history information indicating the user's purchase, which has been stored in step S515, may be stored as separate records or may be put together into a single record and managed as a single piece of history information. In the latter case, the information management server 10 searches the history database 138 using the user ID, the shop ID and the time/date information included in the electronic message received from the shop terminal 20 as keys, and if there is history information indicating that the same user visited the same shop on the same day, rewrites the time/date information and the purchase information in the history information. In this case, the time/date information is overwritten by the time/date information included in the electronic message received from the shop terminal, and the purchase information is added with the purchase information included in the electronic message received from the shop terminal.

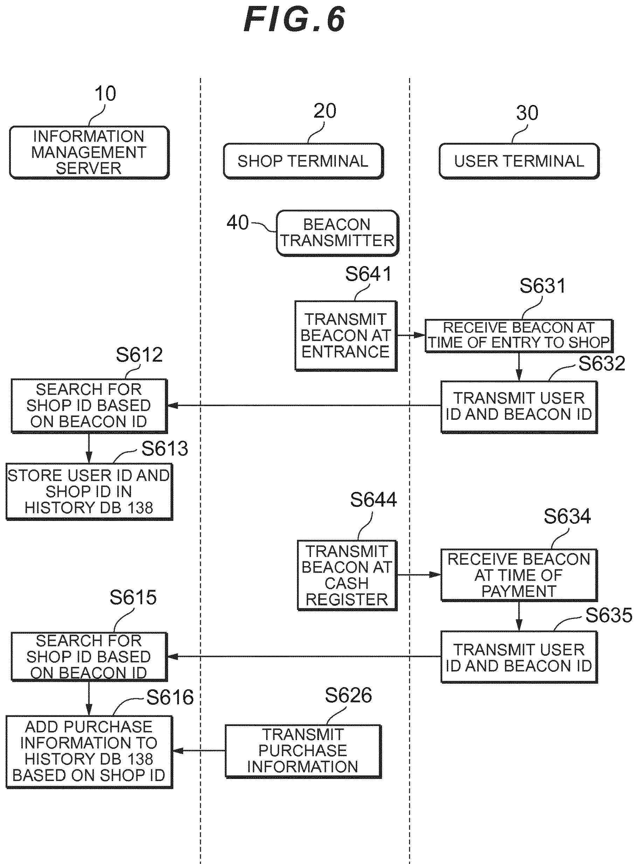

Figure 6 is a flowchart where history information collection processing is performed using a beacon, as an example of the history information collection processing according to the present embodiment. If a user directly visits a shop without making a reservation in advance, history information can be collected by the processing indicated in the figure.

Here, description will be provided based on an example in which beacon transmitters 40 are installed at an area near an entrance and an area near a POS cash register in a shop, respectively. If payment processing is performed using a POS cash register function of a shop terminal 20 instead of a conventional POS cash register, a beacon transmitter 40 may be installed at, e.g., a cover of the shop terminal 20. Consequently, when a user terminal 30 approaches an area around an entrance or a POS cash register in a shop, the information management server 10 can detect the user terminal 30.

Upon a user's entry to a shop at which beacon transmitters 40 are installed, a user terminal 30 carried by the user responds to a beacon transmitted from a beacon transmitter 40 installed at an area near an entrance (steps S641 and S631). Upon reception of the beacon at the entrance, based on control by the beacon processing module 332, the user terminal 30 transmits an electronic message including an ID included in the received beacon (beacon ID), a user ID registered in the user terminal 30 and beacon reception time/date information, to the information management server 10 (step S632).

The information management server 10 searches the beacon database 139 using the beacon ID included in the electronic message received from the user terminal 30 as a key to extract a shop ID corresponding to the beacon ID and information relating to an installation position (step S612). If the information relating to an installation position indicates a visit to the shop such as the entrance, the information management server 10 stores the user ID and the time/date information received from the user terminal 30 and the shop ID searched based on the beacon ID, in the history database 138 (step S613). Consequently, history information indicating the user's visit to the shop is accumulated in the history database 138.

Subsequently, when the user finishes, e.g., drinking and eating or shopping and moves to a POS cash register for making payment, the user terminal 30 responds to a beacon transmitted from a beacon transmitter 40 installed at an area near the POS cash register (steps S644 and S634). Also, even when the user pays a bill at the table in, e.g., a restaurant, if payment processing is performed using a POS cash register function of a shop terminal 20, a beacon can be received at the time of the payment. Upon reception of a beacon at the area near the POS cash register, based on the control by the beacon processing module 332, the user terminal 30 transmits an electronic message including an ID included in the received beacon (beacon ID), the user ID registered in the user terminal 30 and beacon reception time/date information, to the information management server 10 (step S635).

The information management server 10 searches the beacon database 139 using the beacon ID included in the electronic message received from the user terminal 30 as a key to extract a shop ID corresponding to the beacon ID and information relating to an installation position for the beacon (step S615).

Also, independently from step S615, based on the control by the cash register module 231, the shop terminal 20 aggregates amounts of orders and/or products, etc., placed or purchased by the user, and upon the user finishing the payment, generates purchase information including the products, etc., purchased by the user and the payment amount, and transmits an electronic message including the purchase information, the shop ID, time/date information for the payment, to the information management server 10 (step S626).

If the information relating to the installation position, which has been extracted in step S615, indicates a payment position such as the area near the POS cash register, the information management server 10 makes a comparison between the information including the beacon ID, which has been transmitted from the user terminal 30 in step S635, and the information including the purchase information, which has been transmitted from the shop terminal 20 in step S626, with each other, and if the shop IDs obtained from the both are identical to each other and the time/date information pieces in the both fall within a predetermined length of time, determines that the both are pieces of information relating to the same payment, and generates history information based on the both. For example, the information management server 10 stores the user ID included in the electronic message received from the user terminal 30 in step S615, and the shop ID, the payment time/date information and the purchase information included in the electronic message received from the shop terminal 20, in the history database 138 based on the condition that the payment time/date information included in the electronic message received from the shop terminal 20 corresponding to the shop ID extracted in step S615 is within the predetermined length of time from the beacon reception time/date information included in the electronic message received from the user terminal 30 in step S615 (step S616). Consequently, history information indicating the user's purchase is accumulated in the history database 138.

In this case, as in the case of Figure 6, the history information indicating the user's visit to the shop, which has been stored in step S613, and the history information indicating the user's purchase, which has been stored in step S616, may be stored as separate records or may be put together into a single record and managed as a single piece of history information.

Here, an example in which a user's visit to a shop is detected using a beacon transmitter 40 installed at an entrance of the shop or an area inside the shop has been described. However, means for detecting a visit to a shop is not limited to those using a beacon, and other arbitrary means can be used. For example, it is possible that a sound source is installed at an area near an entrance of a shop and subtle sound information emitted from the sound source is detected by a microphone of a user terminal 30 and the user's visit to the shop is thereby detected. Also, it is possible that a current location of a user is grasped using a GPS or WiFi base station to determine whether or not the user visits a predetermined shop.

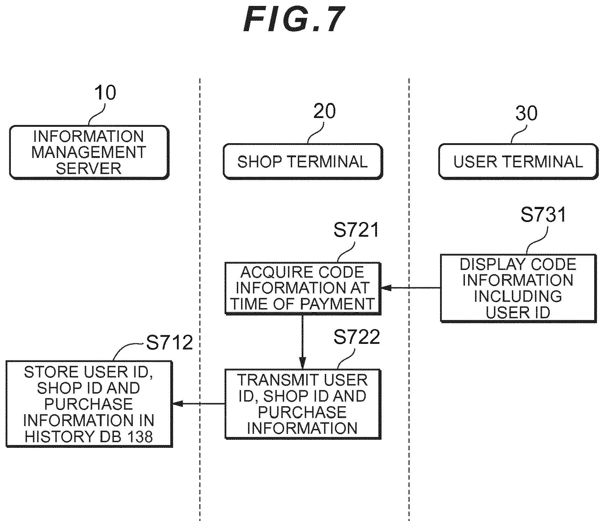

Figure 7 is a flowchart where history information collection processing is performed using information presented by a user at the time of a visit to a shop or payment, as an example of the history information collection processing according to the present embodiment. Where a user directly visits a shop without making a reservation in advance or where no beacon transmitter 40 is installed at a shop, history information can be collected by the processing indicated in the figure.

First, when a user finishes, e.g., drinking and eating or shopping and makes payment, the user causes a two-dimensional barcode to be displayed on the display device 35 of a user terminal 30 based on control by the wallet module 331 (S731). In the two-dimensional barcode, a user ID, and a coupon ID for identifying a coupon are embedded. The user presents the user terminal 30 on which the two-dimensional barcode including the coupon ID is displayed to a clerk, and thereby can use the coupon.

The clerk reads the two-dimensional barcode displayed on the user terminal 30 to acquire the user ID and the coupon ID (step S721) based on control by the code processing module 232 in the shop terminal 20. More specifically, the two-dimensional barcode displayed on the user terminal 30 is picked up using the camera 26 of the shop terminal 20 to acquire the user ID and the coupon ID embedded in the two-dimensional barcode.

The shop terminal 20 identifies the content of the presented coupon based on the acquired coupon ID and offers complementary service such as a discount or a free product to the user. In this case, the shop terminal 20 may ask the information management server 10 about the content of the coupon or the shop terminal 20 or the clerk may determine the content of the coupon.

Also, at the time of the payment, the shop terminal 20 transmits an electronic message including the user ID acquired in step S721, a shop ID registered in the shop terminal 20, payment time/date information, and purchase information generated based on the control by the cash register module 231, to the information management server 10 (step S722).

The information management server 10 stores the user ID, the shop ID, the payment time/date information and the purchase information included in the electronic message received from the shop terminal 20, in the history database 138 in association with one another as history information. Consequently, the history information is generated using the information such as the user ID, included in the information presented by the user, and accumulated in the history database 138.

Here, an example in which at the time of payment, a user presents a coupon to a clerk and a shop terminal 20 thereby acquires a user ID embedded in the coupon has been described. However, presentation of a coupon is not essential, and it is only necessary that a shop terminal 20 or the information management server 10 can acquire a user ID. For example, it is possible that a user presents his/her member's card or information relating to points to the shop side and the shop terminal 20 or the information management server 10 thereby acquires a user ID. Also, for example, if the wallet module 331 has an electronic payment function, it is possible that when electronic payment is made between a shop terminal 20 and a user terminal 30, the shop terminal 20 acquires a user ID from the user terminal 30.

Here, the collection processing indicated in Figures 5 to 7 may be performed redundantly. In other words, even if a user makes a reservation with a shop in advance (processing indicated in Figure 5), when the user visits the shop, history information of the user's visit may be acquired using a beacon (the processing indicated in Figure 6). Furthermore, when a user presents a coupon, history information may be acquired by acquisition of a user ID (processing indicated in Figure 7). In such case, the information management server 10 can collectively manage the overlapping history information by use of time/date information. For example, if there are a plurality of records of history information for a same user and a same shop on a same day or within a predetermined length of time, the information management server 10 may determine that these records indicate a sequence of a visit and a purchase and collectively manage the records as a single piece of information. Also, the information management server 10 may accumulate pieces of history information separately in the history database 138 without putting the pieces of history information together, and when the analysis module 132 analyzes the user's history, may collectively aggregate the overlapping pieces of history information.

### (2. History information analysis processing)

Next, processing for analyzing users using history information recorded in the history database 138 and dividing the users into groups such as a good user group will be described.

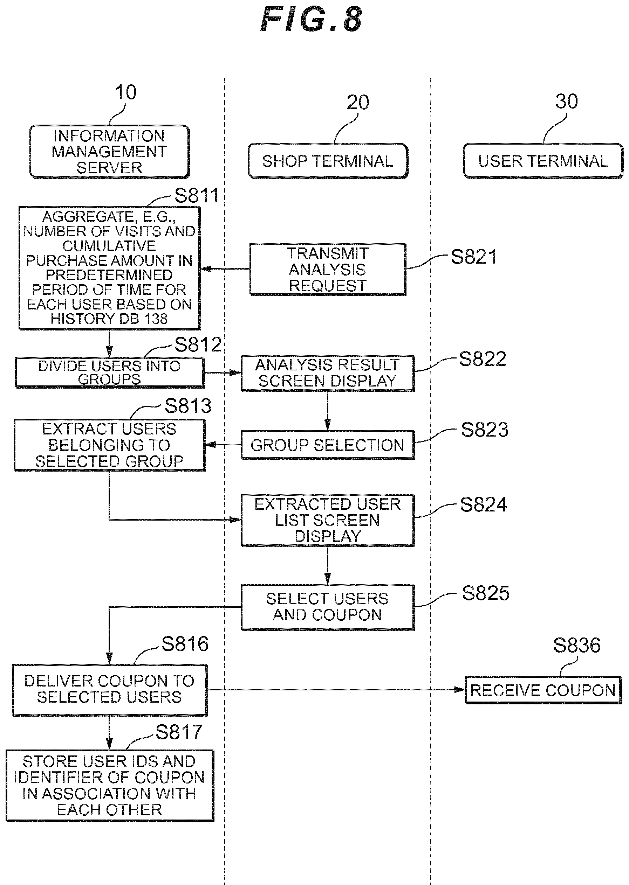

Figure 8 is a flowchart indicating an example of the history information analysis processing and the processing for delivery of, e.g., a coupon according to the present embodiment.

As illustrated in the figure, first, a clerk of a shop makes a request for analysis processing to the information management server 10 via a shop terminal 20 (step S821). Upon reception of the request for analysis processing, the information management server 10 performs analysis processing based on control by the analysis module 132.

The information management server 10 searches the history database 138 using a shop ID of the shop as a key to extract, for example, history information accumulated in a predetermined period of time such as last one year, and aggregates information on the number of visits to the shop in the predetermined period of time, the cumulative purchase amount in the predetermined period of time and a latest purchase date in the shop, for each user (step S811). Here, the period subject to the analysis may be designated by the clerk. Then, processing for grouping the users based on the number of visits, the cumulative purchase amount and the latest purchase date aggregated for each user (step S812). Subsequently, the information management server 10 generates screen information on grouped analysis results and causes the shop terminal 20 to display the analysis results (step S822).

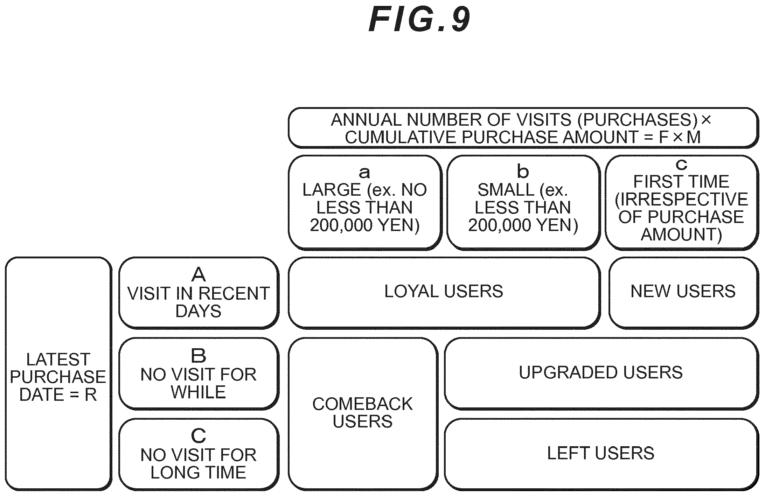

Figure 9 is a schematic diagram illustrating an example of the analysis results displayed on the shop terminal 20 as an example of grouping processing in the present example. Here, an example in which RFM analysis is applied and users are grouped in a two-dimensional matrix form with the latest purchase date as the ordinate axis and the number of visits and the cumulative purchase amount in the predetermined period of time as the abscissa axis is indicated.

In the example indicated in the figure, the latest purchase dates on the ordinate axis are divided into three subgroups, A: visit in recent days, B: no visit for a while, C: no visit for a long time. For example, it is possible that a boundary between A and B is set as one month, a boundary between B and C is set as six months, and the latest purchase dates are grouped in such a manner that latest purchase dates within last zero to one month are grouped as A, latest purchase dates within last one to six months are grouped as B and latest purchase dates within last six months to one year are grouped as C.

Also, the numbers of visits and the cumulative purchase amounts in the predetermined period of time on the abscissa axis are grouped into three subgroups, a: large, b: small, c: first visit. For example, users whose numbers of visits are one belong to subgroup c irrespective of cumulative purchase amounts, and users whose numbers of visits are two or more are further divided into two subgroups according to the cumulative purchase amounts. In Figure 9, cumulative purchase amounts of no less than two hundred thousand yen are grouped as subgroup a, and cumulative purchase amounts of less than two hundred thousand yen are grouped as subgroup b; however, the boundary amount is not limited to the above.

Values of the boundaries between the respective subgroups may be set in advance or may be designated by a clerk via the shop terminal 20. Also, the analysis module 132 may adjust the values of the respective boundaries so that a predetermined ratio of users is included in each subgroup on each of the ordinate axis and the abscissa axis.

In the example indicated in Figure 9, from the above-described viewpoints, users are divided into 3×3 categories and then, finally, the users are divided into five groups that are different from one another in characteristic, such as loyal users, new users, comeback users, upgraded users and left users. Consequently, the clerk can efficiently take a measure such as sending different coupons to the respective groups.

### (3. Processing for delivery of, e.g., coupon)

Referring back to Figure 8, the processing for delivering, e.g., a coupon will be described. The clerk can easily deliver, e.g., a coupon to particular users using an analysis graph image displayed on the shop terminal 20. More specific description will be provided below.

First, the clerk selects a group that is a target of delivery of, e.g., a coupon by, e.g., tapping a particular group from the analysis graph image displayed on the shop terminal 20 as the analysis results (step S823). The information management server 10 extracts users belonging to the selected group (step S813), and creates a list of such users, and causes the shop terminal 20 to display a screen of the list of the extracted users (step S824). The clerk further narrows down the users displayed on the list as necessary, and also, selects a coupon to be delivered, and then makes a request for delivery of data including the coupon to the delivery target users belonging to the selected group (step S825). Also, it is possible that step S824 is skipped and the data including the coupon is delivered to all of the users belonging to the group selected in step S823 without displaying the screen of the list of extracted users on the shop terminal 20.

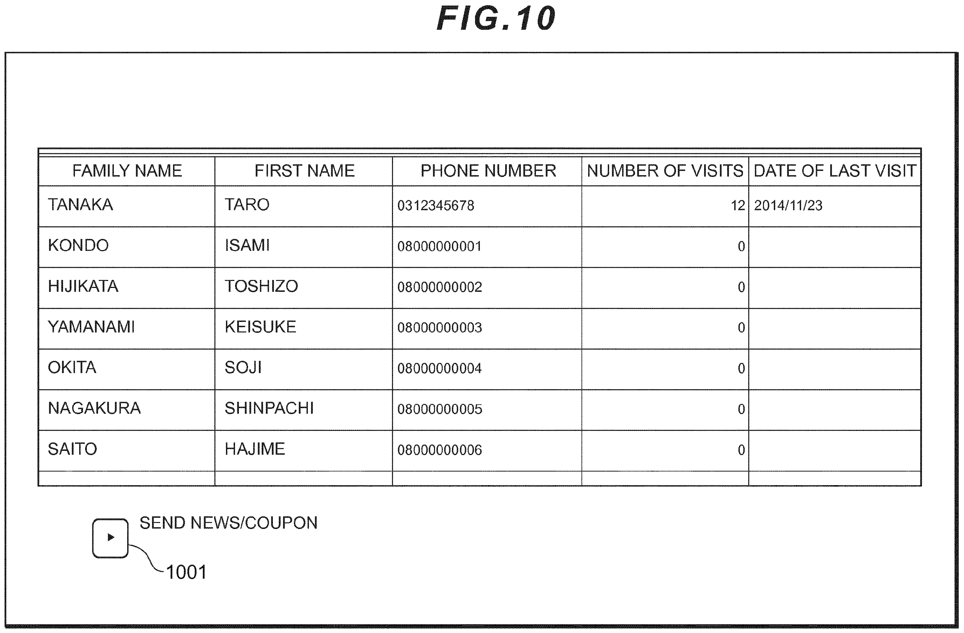

Figure 10 is a schematic diagram illustrating an example of the list displayed on the shop terminal 20 in the present example. As indicated in the figure, in the list, information such as a name, a phone number, the number of visits in the predetermined period of time, a cumulative purchase amount and a latest purchase date is listed for each of the users belonging to the group selected in step S823. When the clerk selects delivery target users from the list and then taps a button 1001, a coupon selection screen is displayed on the shop terminal 20.

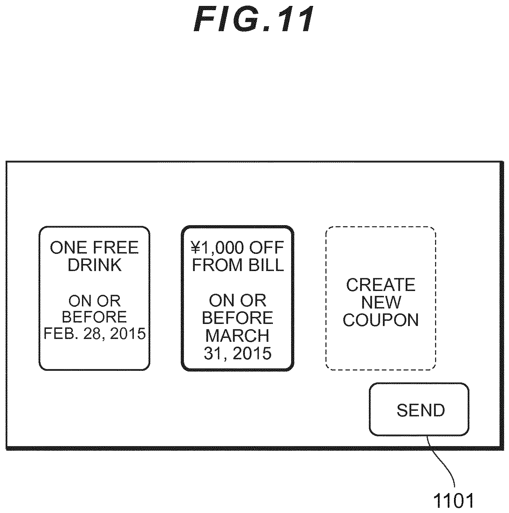

Figure 11 is a schematic diagram illustrating an example of the coupon selection screen displayed on the shop terminal 20 in the present example. As indicated in the figure, the coupon selection screen provides, for example, plural types of coupon choices. The clerk selects an arbitrary coupon or creates a new coupon and taps a transmission button 1101, and then, a request for delivery of the selected coupon to the delivery target users is transmitted to the information management server 10.

Referring back to Figure 8, in response to the coupon delivery request, the information management server 10 performs processing for delivering the selected coupon to the users selected as the delivery targets, based on control by the delivery module 133 (step S816). Consequently, a user terminal 30 receives the coupon (step S836). Also, the information management server 10 stores user IDs of the users to which the coupon has been delivered, and a coupon ID of the delivered coupon in a database in association with each other (step S817). Clearing such data when the delivered coupon is used enables management of a status of use of the coupon.

In the above-described embodiment, the processing from the history information collection to the history information analysis can be automated, and also, the above-described embodiment enables provision of a user interface suitable for utilization of history information. Note that the present invention is not limited to the above-described embodiment and can be carried out in various other modes without departing from the spirit of the present invention. Therefore, the above-described embodiment is a mere exemplification in all respects and is not interpreted in a limited manner. For example, each of the above-described processing steps can partly or wholly be omitted, the order of the processing steps can arbitrarily be changed or the processing steps can be performed in parallel as long as no contradiction occurs in the content of the processing.

## Claims

1. An information management apparatus comprising:
history recording means for recording history information including a user ID for identifying a user, information relating to a date of a visit to a shop and information relating to an amount of purchase made by the user at the shop;
collection means for collecting the history information from a shop terminal used in the shop or a user terminal used by the user and storing the history information in the history recording means;
analysis means for, in response to a request from the shop terminal, extracting history information for the shop corresponding to the shop terminal from the history recording means, dividing users who visited the shop within a predetermined period of time into a plurality of groups and displaying the plurality of groups on the shop terminal in such a manner that the plurality of groups are distinguishable from each other; and
delivery means for, in response to selection of one group by the shop terminal, delivering predetermined data to a user belonging to the selected group.

2. The information management apparatus according to claim 1, wherein the collection means acquires the user ID included in the history information based on a name, a phone number or a login ID of a user, the name, the phone number or the login ID being acquired when the user makes a reservation with the shop.

3. The information management apparatus according to claim 1 or 2, wherein the collection means acquires the user ID included in the history information from the user terminal that has received a beacon transmitted from a transmitter installed at the shop.

4. The information management apparatus according to any of claims 1 to 3, wherein the collection means acquires the user ID included in the history information by the shop terminal reading the user ID from an image displayed on the user terminal.

5. The information management apparatus according to any of claims 1 to 4, wherein the analysis means divides the users into the plurality of groups based on a number of visits to the shop and a cumulative purchase amount in the predetermined period of time, the number of visits and the cumulative purchase amount being aggregated for each user, and information relating to a date of a latest visit or a date of a latest purchase.

6. The information management apparatus according to any of claims 1 to 5, wherein the predetermined data includes data relating to a coupon.

7. An information management method comprising causing a processor of a computer capable of using history recording means for recording history information including a user ID for identifying a user, information relating to a date of a visit to a shop and information relating to an amount of purchase made by the user at the shop, to execute:
collecting the history information from a shop terminal used in the shop or a user terminal used by the user and storing the history information in the history recording means;
in response to a request from the shop terminal, extracting history information for the shop corresponding to the shop terminal from the history recording means, dividing users who visited the shop within a predetermined period of time into a plurality of groups and displaying the plurality of groups on the shop terminal in such a manner that the plurality of groups are distinguishable from each other; and
in response to selection of one group by the shop terminal, delivering predetermined data to a user belonging to the selected group.

8. A program for causing a computer to perform the information management method according to claim 7.
